# EUROPÄISCHE PATENTANMELDUNG

(11) **EP 4 607 767 A1**
(43) Veröffentlichungstag der Anmeldung: **27.08.2025**
(21) Anmeldenummer: 24158796.3
(22) Anmeldetag: 21.02.2024
(51) Int. Cl.: H02K 1/30, H02K 1/278, H02K 15/03

(54) **ROTOR MIT STÜTZSTERN**

(71) Anmelder: Siemens Aktiengesellschaft, 80333 München (DE)
(72) Erfinder: Vollmer, Rolf, 36129 Gersfeld (DE)
(74) Vertreter: Siemens Patent Attorneys

(57) **Zusammenfassung**

Die Erfindung bezieht sich auf einen Rotor (32), umfassend eine Mehrzahl an Materiallagen (16), wobei eine Materiallage (16) aufweist:
- einen Stützstern (12) mit einer Mehrzahl an Strahlen (18), aufweisend amagnetisches Material, angeordnet in der Mitte des Rotors (16),
- ein Flusselement (11), aufweisend weichmagnetisches Material, wobei das Flusselement (11) den Stützstern umgibt, wobei eine radial innere Kontur des Flusselements eine Mehrzahl an Bögen (b1, b2, b3) aufweist.

## Beschreibung

Die Erfindung betrifft einen Rotor einer dynamoelektrischen rotatorischen Maschine.

Rotoren von hochdynamischen Servomotoren tragen meist Magnete auf der Oberfläche des Rotors. Unter den Magneten sind oftmals weichmagnetische Bleche, die den Rückschluss des Magnetfeldes der Magnete ermöglichen. Diese Bleche erhöhen aber auch die Ankerrückwirkung des von der Statorwicklung erzeugten Feldes. Damit wird das Statorblech bereits bei geringen Strömen gesättigt. Außerdem führt das weichmagnetische Blech im Rotor zu einer erhöhten q-Induktivität.

Sowohl ein erhöhtes Sättigungsverhalten als auch eine hohe q-Induktivität reduzieren das Beschleunigungsvermögen des Servomotors.

Der Erfindung liegt die Aufgabe zugrunde, dies zu verbessern.

Die Lösung der Aufgabe gelingt durch Anspruch 1, d. h. einen Rotor, umfassend eine Mehrzahl an Materiallagen, wobei eine Materiallage aufweist: einen Stützstern mit einer Mehrzahl an Strahlen, aufweisend amagnetisches Material, angeordnet in der Mitte des Rotors; ein Flusselement, aufweisend weichmagnetisches Material, wobei das Element der Stützstern umgibt, wobei eine radial innere Kontur des Flusselements eine Mehrzahl an Bögen aufweist.

Ein Bogen ist vorteilhaft eine gebogene Linie oder Biegung. Der Bogen kann ein gekrümmtes Kurvenstück sein.

Durch die Erfindung wird das Sättigungsverhalten verbessert und eine q-Induktivität verringert. So wird eine verbesserte Beschleunigung erreicht.

Die Strahlen entsprechen vorteilhaft einer Anzahl von Polen der Maschine.

Vorzugsweise weist der Rotor eine Mehrzahl an Permanentmagneten auf, wobei die Permanentmagnete an einem radial äußeren Ende des Flusselements angeordnet sind. Vorteilhaft ist eine Ausführung, wonach eine radial äußere Kontur des Flusselements wenigstens im Wesentlichen rund ist.

So kann ein guter Gleichlauf des Rotors erreicht werden.

Der Aufbau der Flusselemente, auch weichmagnetischen Flussleitelemente, erfolgt vorteilhaft mittels Materiallagen, insbesondere Blechen. Der Stern kann massiv sein. Vorteilhaft ist für den Stern ein elektrisch nicht leitendes Material.

Die Magnete werden vorteilhaft auf einen Rotorkörper, aufweisend Flusselemente und Stern, geklebt und/oder kraftschlüssig festgehalten (z. B. mittels einer Bandage).

Eine Materiallage mit einem weichmagnetischen Flussleitbereich und einem amagnetischen Sternbereich ermöglicht einen Aufbau in einem Stapel, sodass zwischen den Materiallagen eine Isolierschicht erfolgen kann.

Vorteilhaft ist eine Ausführung, wonach eine Anzahl an Permanentmagneten gleich einer Anzahl der Strahlen ist. Die gleiche Anzahl an Polen und Strahlen führt zu einem robusten Rotoraufbau.

Ein vorteilhaftes Merkmal ist insbesondere die Verjüngung des weichmagnetischen Ringes jeweils in der Mitte der Pole. Diese Verjüngung geht im Idealfall gegen Null. Weniger Strahlen als Pole würde zu einem labileren Rotoraufbau führen. Mehr Strahlen als Pole würde ggf. die Trägheit erhöhen.

Vorteilhaft ist eine Ausführung, wonach eine Anzahl an Permanentmagneten gleich einer Anzahl der Bögen ist.

Die Anzahl der Bögen und die Anzahl der Pole ist vorteilhaft gleich, um die erwünschte magetische Wirkung zu erhalten.

Ein Pol ist, siehe Figuren, mit einer Magnetschale dargestellt. Ein Pol könnte auch aus mehreren Magneten bestehen.

Vorteilhaft ist eine Ausführung, wonach die Permanentmagnete derart am Flusselement angeordnet sind, dass eine Mitte eines Permanentmagneten an einer Stelle des Flusselements mit der geringsten radialen Dicke liegt.

Der Vorteil der geringen Dicke des weichmagnetischen Flusselementes in der Mitte eines Pols liegt vorzugsweise in einer Behinderung des magnetischen Flusses tangential unter dem Magneten von Flussleitstück zu Flussleitstück. Damit wird vorteilhaft der magnetische q-Fluss der Statormagnete behindert, was insbesondere zu den gewünschten Effekten, der reduzierten Sättigung und der reduzierten q-Induktivität, führt.

Vorteilhaft ist eine Ausführung, wonach der Stützstern und das Flusselement stoffschlüssig verbunden sind. Dies führt zu einer besonders stabilen Ausführung.

Der Stoffschluss ist nicht unbedingt erforderlich. Dies führt allerdings vorteilhaft zu einer robusteren Ausführung.

Vorteilhaft ist eine Ausführung, wonach das Material des Stützsterns eine Zugfestigkeit von wenigstens 500 MPa aufweist.

Je fester das Material, desto filigraner können die Strukturen sein. Eine filigrane Struktur des Rotorblechs führt vorteilhaft zu reduzierter Massenträgheit. Das führt zu einem erhöhten Beschleunigungsvermögen.

Vorteilhaft ist eine Ausführung, wonach das Material des Flusselements eine geringere Zugfestigkeit als der Stützstern aufweist, beispielsweise wenigstens 150 MPa und höchstens 500 MPa.

Vorteilhaft ist eine Ausführung, wonach der Stützstern eine wenigstens im Wesentlichen runde Basis aufweist zur Aufnahme einer Welle.

Die Lösung der Aufgabe gelingt ferner durch ein Verfahren zur Herstellung eines Rotors, aufweisend die folgenden Schritte: Herstellen eines Rotorpaketes mit weichmagnetischen Flusselementen und einem amagnetischen Stützstern; Aufbringen der Permanentmagnete auf dem Rotorpaket; Fixieren der Permanentmagnete.

Die Fixierung erfolgt vorteilhaft mittels einer Hülse und/oder Bandage und/oder Klebung.

Das Rotorpaket weist vorteilhaft eine Mehrzahl an hintereinander angeordneten Materiallagen auf.

Die Herstellung der Materiallagen, die einen weichmagnetischen Bereich und einen amagnetischen Stützstern aufweisen, werden vorteilhaft im Sinterverfahren hergestellt.

Hierbei werden vorteilhaft Grünlinge aus getrockneten Pasten hergestellt.

Insbesondere eignet sich dazu die Drucktechnik, d. h. das Auftragen von Pasten durch Schablonen auf eine Grundfläche. Anschließend erfolgt vorteilhaft ein Trocknen bzw. Aushärten.

Die Lösung der Aufgabe gelingt ferner durch eine dynamoelektrische rotatorische Maschine, aufweisend einen derartigen Rotor.

Die Vorteile des beschriebenen Rotoraufbaus sind vielfältig: Der Statorfluss in der q-Achse wird vorteilhaft durch den hohen magnetischen Widerstand behindert. Damit wird vorteilhaft die Ankerrückwirkung und die Sättigung im Eisen reduziert. Dies führt vorteilhaft zu einer lineareren M(I)-Kennlinie und zu höheren maximalen Drehmomenten. Die reduzierte q-Induktivität führt zu einer steileren Spannungsgrenzkennlinie. Beide Effekte führen zu einem erhöhten Beschleunigungsvermögen.

Eine filigrane Struktur des Rotorblechs führt vorteilhaft zu reduzierter Massenträgheit. Das führt zusätzlich zu einem erhöhten Beschleunigungsvermögen.

Die Erfindung beschreibt insbesondere einen vorteilhaften Aufbau eines Rotors für Servomotoren.

Ein Servomotor ist eine Art einer dynamoelektrischen rotatorischen Maschine und wird vorteilhaft dann eingesetzt, wenn eine präzise Steuerung von Position, Geschwindigkeit und Beschleunigung benötigt wird.

Servomotoren werden vorteilhaft in geschlossenen Regelkreisen eingesetzt. Das bedeutet insbesondere, dass ein Rückkopplungssystem verwendet wird, um die tatsächliche Position oder Geschwindigkeit des Motors zu überwachen, und diese Informationen werden verwendet, um die Leistung des Motors entsprechend anzupassen.

Servomotoren sind vorzugsweise mit Rückkopplungseinrichtungen wie Encodern ausgestattet. Diese Geräte liefern vorteilhaft kontinuierlich Informationen über die aktuelle Position oder Geschwindigkeit des Motors, was für eine präzise Steuerung von Vorteil ist.

Servomotoren zeichnen sich durch ihre hohe Präzision und Genauigkeit bei der Positionierung aus. Diese Eigenschaften machen sie besonders geeignet für Anwendungen, bei denen eine exakte Steuerung erforderlich ist.

Anwendungen: Servomotoren finden in einer Vielzahl von Anwendungen Verwendung, wie zum Beispiel in der Robotik, CNC-Maschinen, Förderanlagen, Luft- und Raumfahrt, Kamerasystemen und anderen industriellen Anwendungen.

Zu den Vorteilen von Servomotoren gehören hohe Effizienz, ein hoher Drehmoment-zu-Trägheitsverhältnis und die Fähigkeit, präzise und schnelle Bewegungen zu ermöglichen.

In anderen Worten kann die Erfindung wie folgt beschrieben werden: Der Rotor hat vorteilhaft, wie bereits oben beschrieben, Permanentmagnete auf der Rotoroberfläche. Unterhalb der Magnete befindet sich bogenförmig im Wesentlichen nur für den magnetischen Fluss der Rotormagnete weichmagnetisches Blech. Die weichmagnetischen Bögen haben in der Mitte der Magnete vorteilhaft die geringste radiale Dicke, die vorzugsweise im Idealfall gegen Null geht. Die Bögen werden von einem amagnetischen Stützstern gehalten. Die weichmagnetischen Bögen werden vorzugsweise metall-stoffschlüssig mit dem amagnetischen Stützstern verbunden.

Vorzugsweise erfolgt das über eine Sinterung.

Das Blech, aufweisend den Stützstern und die weichmagnetischen Bögen, wird trägheitsarm gestaltet. Je fester das Material ist, desto filigranere Strukturen sind möglich. Dazu hat das Material des Stützsterns vorzugsweise eine hohe Festigkeit.

Die Zugfestigkeit ist vorzugsweise höher als 500MPa.

Das weichmagnetische Material der Bögen kann eine deutlich geringere Zugfestigkeit haben, z.B. größer 150MPa.

Im Folgenden wird die Erfindung anhand der in den Figuren dargestellten Ausführungsbeispiele näher beschrieben und erläutert. Es zeigen:
- FIG 1: einen Rotor einer dynamoelektrischen rotatorischen Maschine,
- FIG 2: ein Drehmoment-Drehzahldiagramm,
- FIG 3: einen Rotor, eine Welle sowie einen Stator einer dynamoelektrischen rotatorischen Maschine,
- FIG 4: ein Verfahren zur Herstellung.

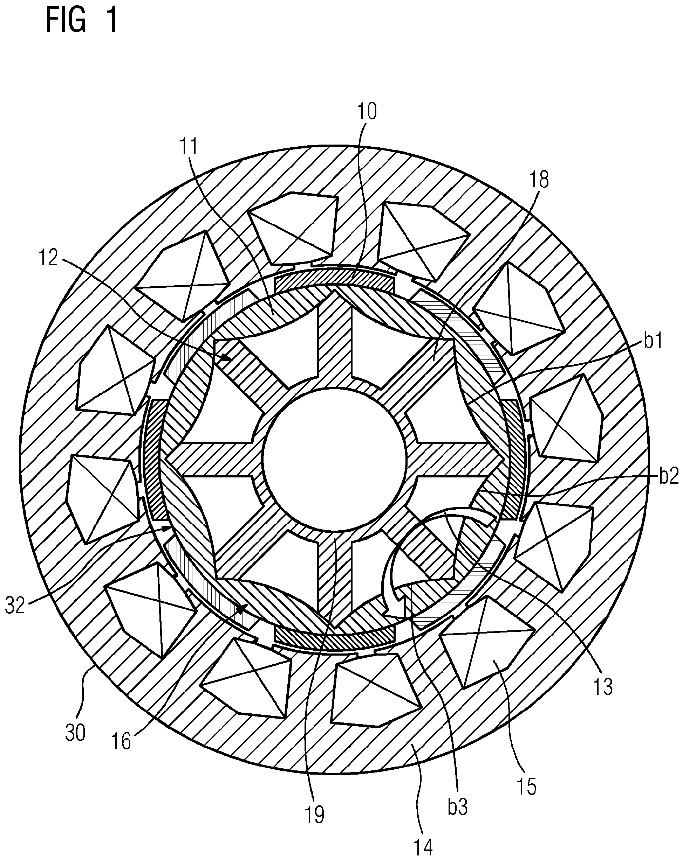

FIG 1 zeigt einen Rotor 32 einer dynamoelektrischen rotatorischen Maschine.

Der Rotor 32 weist eine Mehrzahl an Materiallagen 16 auf, wobei eine Materiallage 16 einen Stützstern 12 mit einer Mehrzahl an Strahlen 18 umfasst. Der Stützstern 12 weist amagnetisches Material auf und ist vorzugsweise trägheitsarm. Der Stützstern 12 ist in der Mitte des Rotors 32 angeordnet.

Ein Rotorpaket wird vorteilhaft aus elektrisch isolierten Materiallagen 16 hergestellt.

Ferner zeigt die Figur ein Flusselement 11, welches weichmagnetisches Material aufweist, und den Stützstern 12 umgibt. Eine radial innere Kontur des Flusselements 11 weist eine Mehrzahl an Bögen auf, exemplarisch dargestellt durch b1, b2, b3.

An einem radial äußeren Ende des Flusselements 11, sozusagen an der Oberfläche des Flusselements 11, sind Permanentmagnete 10 angeordnet. Die radial äußere Kontur des Flusselements 11 ist wenigstens im Wesentlichen rund.

In der gezeigten Ausführungsform ist eine Anzahl an Permanentmagneten 10 gleich einer Anzahl der Strahlen 18.

Ferner ist auch eine Anzahl an Permanentmagneten 10 gleich einer Anzahl der Bögen b1...b3.

Wie in der Figur zu sehen ist, sind die Permanentmagneten 10 derart auf der Oberfläche des Flusselements 11 angeordnet, dass eine Mitte des Permanentmagneten 10 an einer Stelle des Flusselements 11 liegt, an welcher das Flusselement 11 die geringste radiale Dicke aufweist. In anderen Worten kann dies auch beschrieben werden:
Dort wo sich ein Bogen einer den radial äußeren Rand des Flusselements 11 annähert und dort wo ein weiterer Bogen beginnt, dort ist diese Stelle.

Vorteilhaft sind der Stützstern 12 und das Flusselement 11 stoffschlüssig miteinander verbunden.

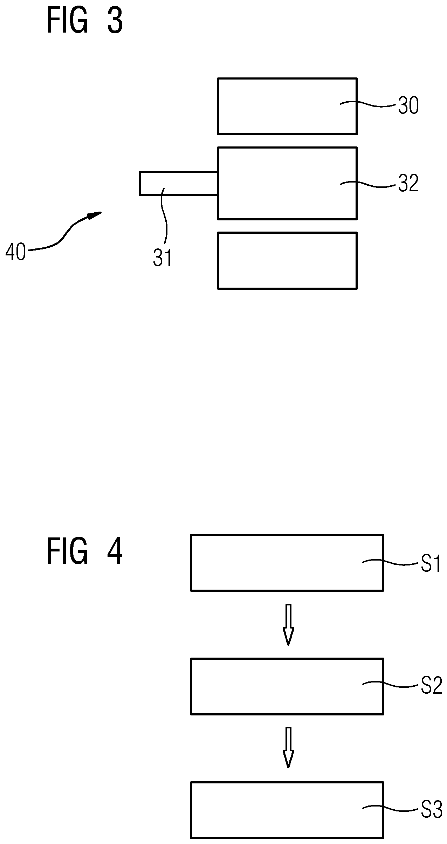

Die Figur zeigt zudem eine wenigstens im Wesentlichen runde Basis 19 des Flusselements 11. Diese ist vorzugsweise zentral angeordnet und dient der Aufnahme einer Welle 31 (siehe FIG 3).

Ferner sind in Figur 1 eine Materiallage eines Stators 14, insbesondere Statorblech, gezeigt sowie Nuten 15.

Ferner zeigt Figur 1 mit dem Bezugszeichen 13 noch einen q-Fluss.

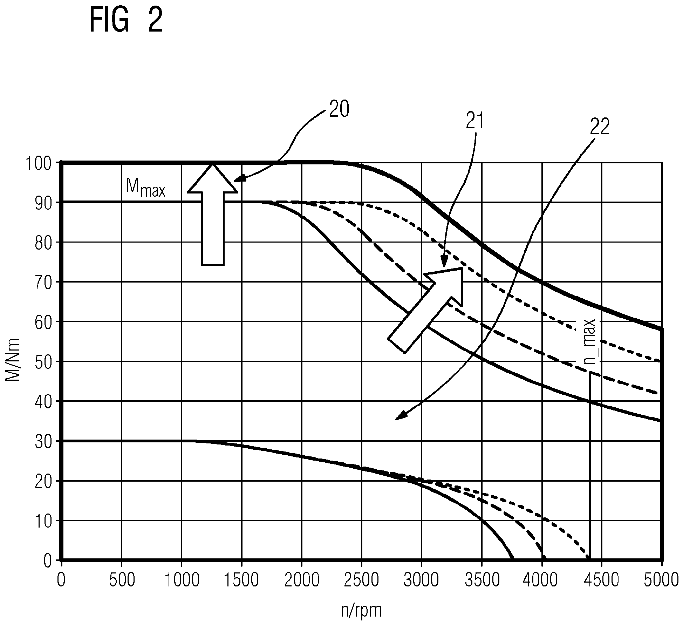

FIG 2 zeigt ein Drehmoment-Drehzahldiagramm.

Durch die Erfindung wird ein höheres Maximaldrehmoment 20 Mmax erreicht und auch ein höheres Drehmoment an der Spannungsgrenze (siehe Bezugszeichen 21). Es ergibt sich dadurch eine größere Drehmoment-Drehzahlfläche (siehe Bezugszeichen 22), wodurch eine bessere Beschleunigung der Maschine erreicht wird.

FIG 3 zeigt einen Rotor 32, eine Welle 31 sowie einen Stator 30 einer dynamoelektrischen rotatorischen Maschine 40.

FIG 4 zeigt ein Verfahren zur Herstellung.

In einem Verfahrensschritt S1 erfolgt ein Herstellen eines Rotorpaketes mit weichmagnetischen Flusselementen und einem amagnetischen Stern.

In einem Verfahrensschritt S2 erfolgt ein Aufbringen der Magnete auf dem Rotorpaket.

In einem Verfahrensschritt S3 erfolgt ein Fixieren der Magnete, insbesondere mit einer Hülse und/oder Bandage. Auch eine Klebung ist möglich.

## Patentansprüche

1. Rotor (32), umfassend eine Mehrzahl an Materiallagen (16), wobei eine Materiallage (16) aufweist:
- einen Stützstern (12) mit einer Mehrzahl an Strahlen (18), aufweisend amagnetisches Material, angeordnet in der Mitte des Rotors (16),
- ein Flusselement (11), aufweisend weichmagnetisches Material, wobei das Flusselement (11) den Stützstern umgibt, wobei eine radial innere Kontur des Flusselements eine Mehrzahl an Bögen (b1, b2, b3) aufweist.

2. Rotor (32) nach Anspruch 1, aufweisend eine Mehrzahl an Permanentmagneten (10), wobei die Permanentmagnete (10) an einem radial äußeren Ende des Flusselements (11) angeordnet sind.

3. Rotor (32) nach einem der vorhergehenden Ansprüche, wobei eine radial äußere Kontur des Flusselements wenigstens im Wesentlichen rund ist.

4. Rotor (32) nach einem der vorhergehenden Ansprüche, wobei eine Anzahl an Permanentmagneten (10) gleich einer Anzahl der Strahlen (18) ist.

5. Rotor (32) nach einem der vorhergehenden Ansprüche, wobei eine Anzahl an Permanentmagneten (10) gleich einer Anzahl der Bögen (11) ist.

6. Rotor (32) nach einem der vorhergehenden Ansprüche, wobei die Permanentmagnete (10) derart am Flusselement (11) angeordnet sind, dass eine Mitte eines Permanentmagneten (10) an einer Stelle des Flusselements (11) mit der geringsten radialen Dicke liegt.

7. Rotor (32) nach einem der vorhergehenden Ansprüche, wobei der Stützstern (12) und das Flusselement (11) stoffschlüssig verbunden sind.

8. Rotor (32) nach einem der vorhergehenden Ansprüche, wobei das Material des Stützsterns (12) eine Zugfestigkeit von wenigstens 500 MPa aufweist.

9. Rotor (32) nach einem der vorhergehenden Ansprüche, wobei das Material des Flusselements eine geringere Zugfestigkeit als der Stützstern (12) aufweist, beispielsweise wenigstens 150 MPa und höchstens 500 MPa.

10. Rotor (32) nach einem der vorhergehenden Ansprüche, wobei der Stützstern (12) eine wenigstens im Wesentlichen runde Basis aufweist zur Aufnahme einer Welle.

11. Verfahren zur Herstellung eines Rotors (32) nach einem der vorhergehenden Ansprüche, aufweisend die folgenden Schritte:
- Herstellen eines Rotorpaketes mit weichmagnetischen Flusselementen (11) und einem amagnetischen Stützstern (12),
- Aufbringen der Permanentmagnete (10) auf dem Rotorpaket,
- Fixieren der Permanentmagnete (10), insbesondere mit einer Hülse und/oder Bandage und/oder Klebung.

12. Dynamoelektrische rotatorische Maschine (40), aufweisend einen Rotor (32) nach einem der Ansprüche 1 bis 10.
